# EUROPÄISCHE PATENTANMELDUNG

(11) **EP 2 663 090 A2**
(43) Veröffentlichungstag der Anmeldung: **13.11.2013**
(21) Anmeldenummer: 13161926.4
(22) Anmeldetag: 02.04.2013
(51) Int. Cl.: H04Q 9/00

(54) **Verfahren zum Übertragen von Zusatzinformationen des Akkupacks**

(30) Priorität: 09.05.2012 DE 102012207704
(71) Anmelder: ROBERT BOSCH GMBH, 70442 Stuttgart (DE)
(72) Erfinder: Bertsch, Jochen, 75417 Muehlacker-Grossglattbach (DE)

(57) **Zusammenfassung**

Es wird ein Verfahren zum Übertragen von Informationen eines Akkupacks (100) an ein angeschlossenes elektrisches Gerät (200, 300) beschrieben, wobei eine Basisinformation des Akkupacks (100) in Form eines bestimmten Spannungswertes eines analogen Spannungssignals (500) über eine Kommunikationsschnittstelle (133, 233) an das elektrische Gerät (200, 300) übertragen wird. Dabei wird das analoge Spannungssignal (500) moduliert und mithilfe des modulierten Spannungssignals (520) eine Zusatzinformation des Akkupacks (100) zusätzlich zu der Basisinformation über die Kommunikationsschnittstelle (133, 233) an das elektrische Gerät (200, 300) übertragen.

## Beschreibung

Die Erfindung betrifft ein Verfahren zum Übertragen von Informationen eines Akkupacks an ein angeschlossenes elektrisches Gerät. Dabei werden zusätzlich zu mittels eines analogen Spannungssignals übertragenen Basisinformationen des Akkupacks auch Zusatzinformationen des Akkupacks durch Modulation des analogen Spannungssignals übertragen. Ferner betrifft die Erfindung ein entsprechend ausgebildetes Akkupack, sowie ein elektrisches Gerät zum Anschließen an den Akkupack.

Akkupacks werden zur netzunabhängigen Energieversorgung verschiedener Elektrogeräte, wie z. B. elektrischer Werkzeuge, verwendet. Neben elektrischen Kontakten zur Stromversorgung verfügen moderne Akkupacks auch über wenigstens einen weiteren elektrischen Kontakt zum Übertragen eines analogen Spannungssignals. So können beispielsweise über einen Temperaturkontakt aktuelle Temperaturwerte des Akkupacks in Form des analogen Spannungssignals vom angeschlossenen Verbraucher bzw. Ladegerät ausgelesen werden. In Abhängigkeit des Wertes bzw. Pegels dieses Spannungssignals kann dann der angeschlossene Verbraucher oder das angeschlossene Ladegerät den Betrieb regeln. Hingegen können Akkupacks, welche über einen Datenkontakt mit einem Codierwiderstand verfügen, über den Datenkontakt eine weitere Basisinformation des Akkupacks in Form eines analogen Spannungssignals bereitstellen. Dieser Spannungswert kann vom angeschlossenen Verbraucher bzw. vom angeschlossenen Ladegerät ausgelesen werden. In Abhängigkeit des ermittelten Wertes bzw. Pegels des Spannungssignals kann dann der Verbraucher oder das Ladegerät den entsprechenden Vorgang regeln bzw. spezifizierte Betriebsparameter verwenden.

Aus der DE 10 2009 028 941 A1 ist ein Akkupack mit einer Temperaturmessschnittstelle zum Übertragen einer aktuellen Temperaturinformation in Form eines analogen Spannungssignals an ein angeschlossenes elektrisches Gerät bekannt, bei welchem beim Vorliegen eines Fehlers anstelle der aktuellen Temperatur ein dem angeschlossenen elektrischen Gerät den Fehlerfall signalisierendes Spannungssignal über die Temperaturmessschnittstelle übertragen wird. Beide Informationen werden dabei alternativ zueinander übertragen.

Es ist Aufgabe der Erfindung, eine einfache Möglichkeit zur Übertragung von Informationen eines Akkupacks bereitzustellen, welche eine parallele Übertragung von Basisinformationen und Zusatzinformationen ermöglicht. Diese Aufgabe wird durch ein Verfahren gemäß Anspruch 1 gelöst. Ferner wird die Aufgabe durch ein Akkupack gemäß Anspruch 9, sowie durch ein elektrisches Gerät gemäß Anspruch 10 gelöst. Weitere vorteilhafte Ausführungsformen der Erfindung sind in den untergeordneten Ansprüchen angegeben.

Gemäß der Erfindung ist ein Verfahren zum Übertragen von Informationen eines Akkupacks an ein angeschlossenes elektrisches Gerät vorgesehen, wobei eine Basisinformation des Akkupacks in Form eines bestimmten Spannungswertes eines analogen Spannungssignals über eine Kommunikationsschnittstelle an das elektrische Gerät übertragen wird. Dabei wird das analoge Spannungssignal moduliert und mit Hilfe des modulierten Spannungssignals eine Zusatzinformation des Akkupacks zusätzlich zu der Basisinformation über die Kommunikationsschnittstelle an das elektrische Gerät übertragen. Durch die Modulation des analogen Spannungssignals kann die Übertragung der Zusatzinformation ohne Einflussnahme auf die Übertragung der Basisinformation stattfinden. Somit können Basisinformation und Zusatzinformation auch gleichzeitig über die gemeinsame Kommunikationsschnittstelle übertragen werden. Hierdurch kann die Anzahl der Kommunikationsschnittstellen über Akkupack und dem angeschlossenen elektrischen Gerät reduziert werden. Andererseits kann mit Hilfe der Doppelbelegung der Kommunikationsschnittelle die Datenübertragungskapazität vergrößert werden.

In einer Ausführungsform ist vorgesehen, dass die Zusatzinformation in Form von Pulsen auf dem analogen Spannungssignal übertragen wird. Mit Hilfe der Pulssignale lässt sich das analoge Spannungssignal relativ einfach modulieren. Dabei kann die Zusatzinformation sowohl mithilfe der Pulsweite bzw. des Pulsabstands als auch mithilfe der Amplitude der einzelnen Pulssignale kodieren.

Eine weitere Ausführungsform sieht vor, dass der zu einem beliebigen Zeitpunkt über die Zeitdauer, welche das elektrische Geräte zum Messen bzw. Erfassen des analogen Spannungssignals benötigt, übermittelte aktuelle Spannungswert des modulierten Spannungssignals im Wesentlichen dem der zu diesem Zeitpunkt aktuellen Basisinformation entsprechenden Spannungswert des analogen Spannungssignals entspricht. Hierdurch wird erreicht, dass das Auslesen der Basisinformation auch bei einem modulierten Spannungssignal ohne weitere Maßnahmen möglich ist, da der ausgelesene bzw. gemessene Spannungswert eines modulierten Spannungssignals sich nicht wesentlich von dem Spannungswert des unmodulierten analogen Spannungssignals unterscheidet.

Eine weitere Ausführungsform sieht vor, dass das modulierte Spannungssignal einen dem ursprünglichen analogen Spannungssignal entsprechenden ersten Signalanteil und einen durch die Modulation bedingten zweiten Signalanteil umfasst, wobei der zweite Signalanteil vom elektrischen Gerät herausgefiltert wird, um den die Basisinformation enthaltenden ersten Signalanteil aus dem modulierten Spannungssignal zu erhalten. Bei diesem Konzept lässt sich die Modulation des analogen Spannungssignals relativ einfach durch Überlagerung mit einem entsprechenden zweiten Signal durchführen. Dabei können die beiden Signalanteile relativ einfach mit Hilfe eines geeigneten Filters voneinander getrennt werden.

Eine weitere Ausführungsform sieht vor, dass das die Basisinformation enthaltende analoge Spannungssignal im elektrischen Gerät mit Hilfe eines Tiefpassfilters aus dem modulierten Spannungssignal ermittelt wird. Mit Hilfe eines solchen Tiefpassfilters können die hochfrequenten Signalanteile des modulierten Spannungssignals relativ effektiv herausgefiltert werden. Dabei lässt sich ein entsprechendes Tiefpassfilter relativ einfach und kostengünstig im elektrischen Gerät implementieren.

Eine weitere Ausführungsform sieht vor, dass die Zusatzinformation wenigstens eine Spezifikation des Akkupacks umfasst. Mit Hilfe einer solchen Spezifikation können für den Betrieb des Akkupacks an einem Verbraucher bzw. für das Laden des Akkupacks in einem Ladegerät wichtige Parameter bereitgestellt und der entsprechende Vorgang optimiert durchgeführt werden.

In einer weiteren Ausführungsform ist vorgesehen, dass die Zusatzinformationen einen Stromwert, eine Abschaltbedingung, eine länderspezifische Codierung und/oder eine Kompatibilitätsinformation umfasst. Mit Hilfe dieser Information kann der Betrieb des Akkupacks an einem Verbraucher bzw. das Laden des Akkupacks in einem Ladegerät verbessert werden. Insbesondere kann durch Übermittlung eines Stromwerts der Lade- bzw. Entladestrom begrenzt werden. Die Übermittlung einer Abschaltbedingung des Akkupacks kann die Abschaltung bei einer Fehlfunktion verbessern und somit die Zerstörung des Akkupacks verhindern. Mit Hilfe einer länderspezifischen Codierung und einer Kompatibilitätsinformation kann die Einhaltung der vom Hersteller oder von nationalen Stellen vorgegebenen Kompatibilitätsbedingungen sichergestellt werden.

Eine weitere Ausführungsform sieht vor, dass die Zusatzinformation automatisch nach dem Anschließen des Akkupacks an das elektrische Gerät übertragen wird. Die automatische Übertragung stellt sicher, dass die Zusatzinformation bereits zu Beginn des Betriebes des Akkupacks am elektrischen Gerät zur Verfügung stehen.

Im Folgenden wird die Erfindung anhand von Figuren näher dargestellt. Es zeigen:
Figur 1 schematisch ein gemäß der Erfindung ausgebildetes Akkupack mit zwei Hauptkontakten und einem als Kommunikationsschnittstelle dienenden weiteren elektrischen Kontakt.
Figur 2 der an einem als Verbraucher dienenden Elektrogerät angeschlossener Akkupack aus Figur 1.
Figur 3 der an einem Ladegerät angeschlossene Akkupack aus Figur 1.
Figur 4 eine mögliche Ausführung des erfindungsgemäßen Akkupacks mit einer das analoge Spannungssignal an einem Temperaturmesswiderstand modulierenden Schaltungsanordnung.
Fig. 5 eine weitere Ausführungsform der Schaltungsanordnung zum Modulieren des analogen Spannungssignals eines Temperaturmesswiderstands.
Figur 6 eine schematische Darstellung der durch Modulation eines analogen Spannungssignals zwischen dem Akkupack und dem angeschlossenen elektrischen Gerät übertragenen Informationen.
Figur 7 ein erstes Beispiel für ein moduliertes analoges Spannungssignal, bei welchem die Zusatzinformationen mittels kurzer Impulse übertragen werden.
Figur 8 ein weiteres Ausführungsbeispiel für ein moduliertes analoges Spannungssignal, bei welchem die Zusatzinformationen mittels symmetrischer Pulse übertragen werden.
Figur 9 ein weiteres Ausführungsbeispiel eines modulierten analogen Signals, bei welchem die Zusatzinformationen mittels einer Pulsweitenmodulation übertragen werden.
Figur 10 ein weiteres Ausführungsbeispiel eines modulierten Spannungssignals, bei welchem die Zusatzinformationen mittels einer Amplitudenmodulation übertragen werden.

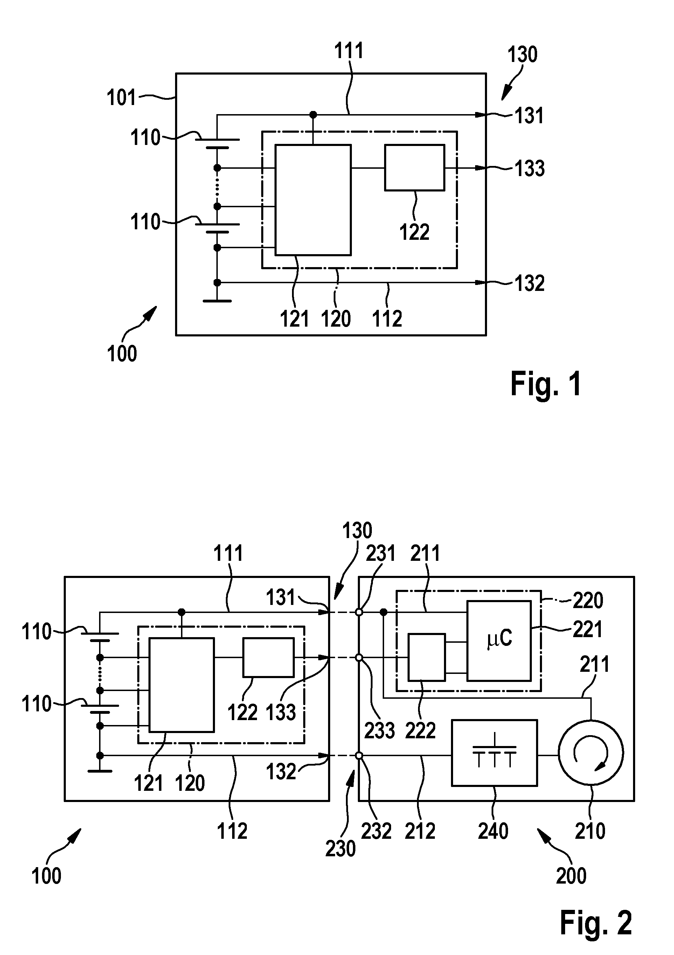

Die **Figur 1** zeigt eine schematische Darstellung eines erfindungsgemäß ausgebildeten Akkupacks 100 umfassend mehrere hintereinander geschaltete Akkumulatorzellen 110, welche über interne elektrische Leitungen 111, 112 mit von außen am Gehäuse 101 zugänglich angeordneten Hauptkontakten 131, 132 elektrisch verbunden sind. Ferner umfasst der Akkupack 100 eine Elektronik 120 zum Überwachen des Zustands des Akkupacks 100 sowie zur Kommunikation mit einem daran angeschlossenen Verbraucher bzw. Ladegerät. Die Elektronik 120 umfasst eine Steuer-/ Auswerteeinrichtung 121, welche den Zustand (z. B. den aktuellen Ladezustand) der einzelnen Akkuzellen 110 überwacht. Ferner umfasst die Elektronik 120 eine Kommunikationseinrichtung 122 zum Übermitteln von Informationen an einen angeschlossenen Verbraucher bzw. an ein angeschlossenes Ladegerät (hier nicht gezeigt). Die Kommunikationseinrichtung 122 ist hierzu mit einer Kommunikationsschnittstelle 133 des Akkupacks 110 verbunden, welche in Form eines am Gehäuse 101 angeordneten und von außen zugänglichen elektrischen Kontakts ausgebildet ist. Die Kommunikationseinrichtung 122 stellt dabei eine Basisinformation des Akkupacks 100 in Form eines analogen Spannungssignals auf der Kommunikationsschnittstelle 133 bereit. Hierbei handelt es sich beispielsweise um die aktuelle Temperatur der Akkuzellen 110, welche als ein mit Hilfe eines temperaturveränderlichen elektrischen Widerstands erzeugter Spannungswert an der Kommunikationsschnittstelle 133 anliegt. Bei einem Akkupack, welcher über einen Datenkontakt verfügt, kann die Kommunikationseinrichtung 122 auf der Kommunikationsschnittstelle 133 einen mittels eines Codierwiderstands bestimmten Spannungswert ausgeben, welcher vom angeschlossenen Verbraucher bzw. Ladegerät ausgelesen und zum Regeln bzw. als spezifizierter Parameter des Akkupacks für den Betrieb des angeschlossenen Geräts 200, 300 verwendet wird.

Bei dem erfindungsgemäß ausgebildeten Akkupack 100 wird über die Kommunikationsschnittstelle 133 zusätzlich zu der in Form eines analogen Spannungssignals übertragenen Basisinformation auch wenigstens eine Zusatzinformation vorzugsweise durch Modulierung des analogen Spannungssignals an das daran angeschlossene elektrische Gerät 200, 300 übertragen.

Die **Figur 2** zeigt den Akkupack 100 aus Figur 1 angeschlossen an einen elektrischen Verbraucher 200, wie z. B. einem Elektrohandwerkzeug. Hierbei sind die elektrischen Kontakte 131, 132, 133 des Akkupacks 100 elektrisch mit den jeweils komplementären elektrischen Kontakten 231, 232, 233 des Verbrauchers 200 verbunden. Das Elektrogerät 200 umfasst ein leistungsaufnehmendes Bauteil 210, beispielsweise einen Elektromotor, eine Leistungselektronik 240 zum Versorgen des leistungsaufnehmenden Bauteils 210 mit elektrischer Energie und eine Elektronik 220 zum Steuern des Betriebs des leistungsaufnehmenden Bauteils 210. Die Elektronik 220 umfasst dabei eine Steuereinrichtung 221, welche beispielsweise in Form eines Mikroprozessors ausgebildet sein kann. Die Steuereinrichtung 221 steuert die Schaltvorgänge der Leistungselektronik 240 und damit die Energiezufuhr des leistungsaufnehmenden Bauteils 210. Die Steuereinrichtung 221 berücksichtigt hierzu Informationen, welche über die Kommunikationsschnittstelle 233 vom angeschlossenen Akkupack 100 bereitgestellt werden. Erfindungsgemäß werden dabei über die Kommunikationsschnittstelle neben einer in Form eines analogen Spannungssignals übertragenen Basisinformation zusätzlich auch über dieselbe Kommunikationsschnittstelle übertragenen Zusatzinformationen des Akkupacks 100 empfangen.

Das Elektrogerät 200 weist dabei eine Kommunikationsschnittstelle 222 auf, welche die über die gemeinsame Schnittstelle 223 in Form eines modulierten Spannungssignals übertragenen Informationen empfängt und der Steuereinrichtung 221 die darin enthaltenen Basisinformationen und Zusatzinformationen getrennt voneinander zur Verfügung stellt. Hierzu kann die Kommunikationseinrichtung 122 entsprechende Einrichtungen, wie z. B. Filter, Demodulatoren, umfassen, mit deren Hilfe die Basis- und Zusatzinformationen aus dem modulierten analogen Spannungssignal extrahiert werden können.

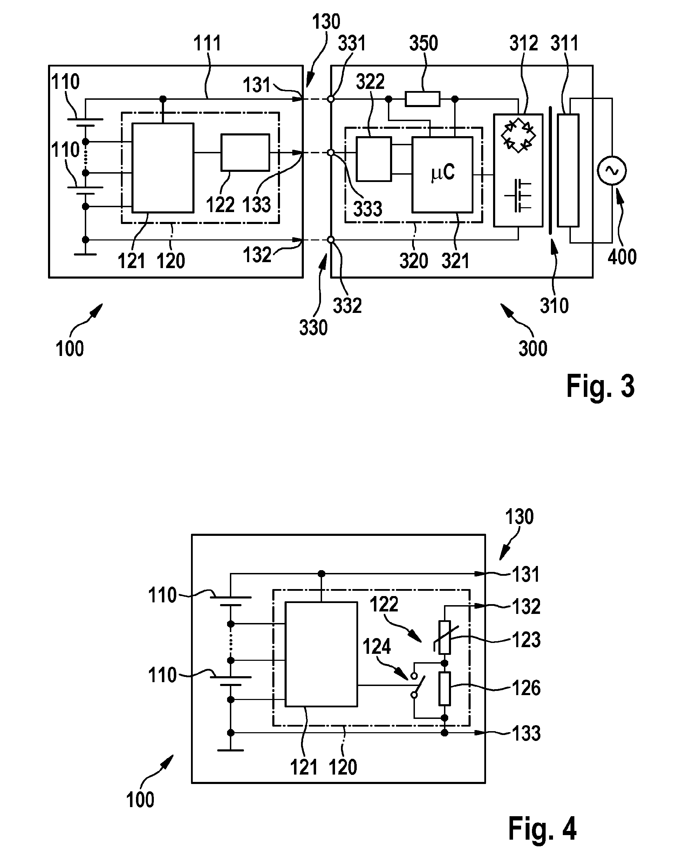

Die **Figur 3** zeigt eine schematische Darstellung des erfindungsgemäßen Akkupacks 100 aus Figur 1 angeschlossen an ein Ladegerät 300. Dabei sind analog zu der Anordnung aus Figur 2 die Hauptkontakte 131, 132 und der Kommunikationseinrichtungskontakt 133 der elektrischen Kontaktanordnung 130 des Akkupacks 100 an entsprechende Kontakte 131, 132, 133 einer elektrischen Kontaktanordnung 330 des Ladegeräts 300 angeschlossen. Das hier beispielhaft gezeigte Ladegerät 300 umfasst einen Transformator 310, der primärstromkreisseitig an ein externes Stromnetz 400 anschließbar ist. Sekundärstromkreisseitig kann der Transformator 310 mit bekannten Maßnahmen wie z. B. Gleichrichter oder Leistungsschalter oder einer Kombination dieser Maßnahmen eine für das Laden des Akkupacks notwendige Spannung erzeugen. Ferner umfasst der Akkupack eine Elektronik 320 mit einer Steuereinrichtung 321 und einer Kommunikationseinrichtung 322. Die Steuereinrichtung 321 steuert bzw. regelt den Betrieb des Transformators 310. Hierzu überwacht die Steuereinrichtung 321 die vom Transformator 310 bereitgestellte Stromstärke mit Hilfe eines Messwiderstands 350.

Mit Hilfe der Kommunikationseinrichtung 322 empfängt das Ladegerät 300 die über die Kommunikationsschnittstelle vom Akkupack 100 gesendeten Informationen. Die Kommunikationseinrichtung 322 trennt die gemeinsam übertragenen Basisinformationen und Zusatzinformationen und stellt diese der Steuereinrichtung 321 separat zur Verfügung. Anhand der empfangenen Informationen regelt die Steuereinrichtung 321 den Betrieb des Transformators 310.

Die **Figur 4** zeigt schematisch einen Akkupack 100 mit einem Temperaturmesswiderstand zum Erfassen der aktuellen Temperatur wenigstens einer Akkuzelle 100. Der vorzugsweise unmittelbar an den Akkuzellen 110 angeordnete oder über geeignete Wärmeleitstrukturen mit den Akkuzellen 110 thermisch gekoppelte Temperaturmesswiderstand 123 ändert seine elektrische Leitfähigkeit in Abhängigkeit von der aktuellen Akkuzellentemperatur, sodass am Kommunikationsschnittstellenkontakt 132 ein von der aktuellen Akkuzellentemperatur abhängiges analoges Spannungssignal 500 bereitgestellt wird. Zur Modulation dieses analogen Spannungssignals 500 kann grundsätzlich jedes geeignete Verfahren eingesetzt werden. Um den Spannungspegel des analogen Spannungssignals 500 beispielsweise kurzfristig zu variieren, kann der Gesamtwiderstand der Messschnittstelle verändert werden. Dieses kann beispielsweise durch eine Überbrückungsschaltung realisiert werden, welche je nach Schaltzustand einen zweiten ohmschen Widerstand 126 in der Reihe zu dem Messwiderstand 123 schaltet. In der Figur 4 ist hierzu der zweite Widerstand 126 in Reihe zu dem Messwiderstand 123 geschaltet. Mit Hilfe eines über die Steuereinrichtung 121 ansteuerbaren Schaltelements 124 kann der zweite Widerstand 126 überbrückt werden. Je nach Anwendung kann der Pegel des analogen Spannungssignals 500 mit Hilfe dieser Schaltung kurzfristig angehoben oder abgesenkt werden. In dem Fall, dass das analoge Spannungssignal 500 durch den aus den beiden Widerständen 123, 126 gebildeten Gesamtwiderstand bestimmt wird, wird durch Schließen des Schalters 124 der zusätzliche Widerstand 126 überbrückt und damit der Gesamtwiderstand verringert. In diesem Fall zeigt das modulierte Spannungssignal 520 einen positiven Spannungspuls.

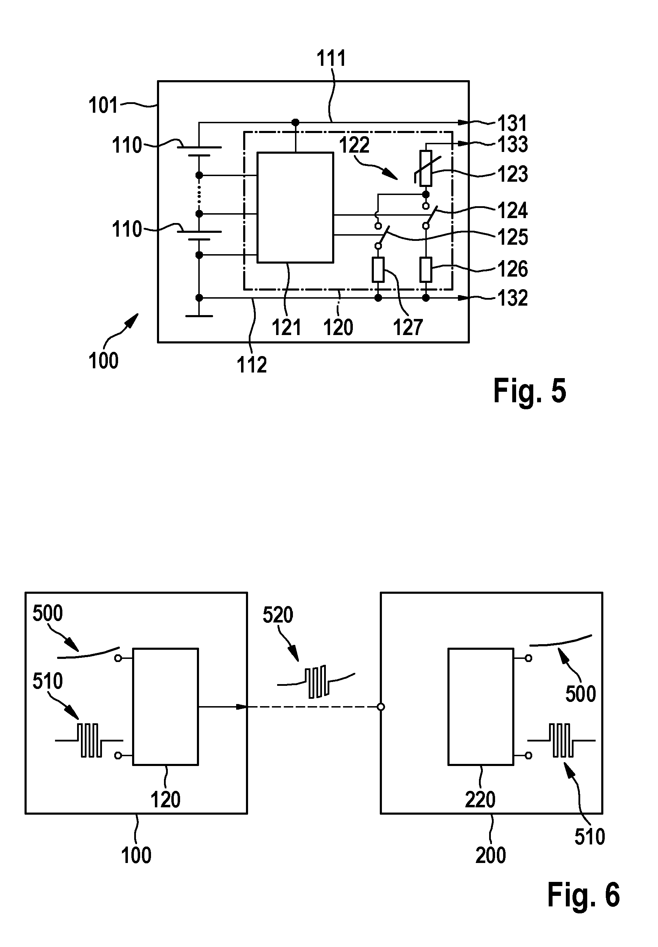

Um die durch die Modulation verursachten Schwankungen des analogen Spannungssignals 500 und des damit verbundenen Messwerts gering zu halten, kann es sinnvoll sein, die Modulation mit Hilfe symmetrischer Signale zu realisieren. Hierzu können aus jeweils einem positiven und einem negativen Spannungspuls bestehende Pulsfolgen verwendet werden, welche sich gemittelt über die Zeit im Wesentlichen gegenseitig kompensieren. Die **Figur 5** zeigt hierzu beispielhaft ein Akkupack 100 mit einer Kommunikationseinrichtung 122, welche eine Modulation mit Hilfe symmetrischer Signalpulse auf dem analogen Spannungssignal 500 erzeugen kann. Hierzu ist eine Parallelschaltung aus zwei ohmschen Widerständen 126, 127, welche über verschiedene Werte verfügen, in Reihe zum Temperaturmesswiderstand 123 geschaltet. Jeder der beiden zusätzlichen Widerstände 126, 127 ist dabei über eine eigene Schalteinrichtung 124, 125 individuell zu- und abschaltbar ausgebildet. Die beiden Schalteinrichtungen 124, 125 werden über entsprechende Leitungen von der Steuereinrichtung 121 derart individuell angesteuert, dass jeweils wenigstens einer beiden zusätzlichen Widerstände 126, 127 in Reihe zum Temperaturmesswiderstand 123 geschaltet ist.

Der erste Widerstand 126, welcher vorzugsweise kleiner ausgebildet als der zweite Widerstand 127, wird im regulären Betrieb zugeschaltet, während der größere zweite Widerstand 127 im regulären Betrieb ausgeschaltet ist. Somit wird das an der Kommunikationsschnittstelle 133 anliegende analoge Spannungssignal 500 durch den der Summe der beiden Widerstände 123, 126 entsprechenden Gesamtwiderstand bestimmt. Zum Modulieren des analogen Spannungssignals 500 wird der Gesamtwiderstand durch Zu- und Abschalten der beiden Widerstände 126, 127 varüert. Dabei wird zum Erzeugen eines positiven Spannungspulses zusätzlich zu dem bereits geschalteten ersten Widerstand 126 auch der zweite Widerstand 127 mit Hilfe des Schalters 125 zugeschaltet. Der sich durch die Parallelschaltung der beiden Widerstände 126, 127 ergebende niedrigere Gesamtwiderstand ergibt an der Kommunikationsschnittstelle einen positiven Spannungspuls. Anschließend wird der Schalter 124 geöffnet, sodass nunmehr lediglich der größere zweite Widerstand 127 in Reihe zum Temperaturmesswiderstand 123 geschaltet ist. Durch die Erhöhung des Gesamtwiderstands ergibt sich an der Kommunikationsschnittstelle 133 ein negativer Spannungspuls. Somit kann durch entsprechende Schaltfolge der beiden Schalter 124, 125 die gewünschte Pulsfolge aus positiven und negativen Pulsen relativ einfach erzeugt werden.

Um zu erreichen, dass die Amplituden der positiven und negativen Pulse möglichst gleich groß ausfallen, sollte das Verhältnis zwischen dem ersten Widerstand 126 und dem zweiten Widerstand 127 im Wesentlichen fünf zu sechs betragen. In diesem Falle ergibt sich für die drei verwendeten Schaltkombinationen, nämlich nur der erste Widerstand 126 in Reihe zu dem Temperaturmesswiderstand 123, nur der zweite Widerstand 127 in Reihe zu dem Temperaturmesswiderstand 123 und die Parallelschaltung aus den beiden Widerständen 126, 127 in Reihe zu dem Temperaturmesswiderstand 123, eine gleichmäßige Widerstandskaskade.

Die **Figur 6** stellt eine schematische Darstellung des zeitlichen Verlaufs der über zwischen dem Akkupack 100 und dem elektrischen Gerät 200 übertragenen Signale. Hierbei wird ein an einem Eingang der Kommunikationseinrichtung 120 des Akkupacks 100 anliegendes analoges Spannungssignal 500 mit einem eine Zusatzinformation tragendem Codiersignal 510 kombiniert. Das modulierte Spannungssignal 520 wird an das angeschlossene elektrische Gerät 200 übertragen und von dessen Kommunikationseinrichtung 220 wieder in ein analoges Spannungssignal 500 und den entsprechend modulierten Signalanteil 510 separiert.

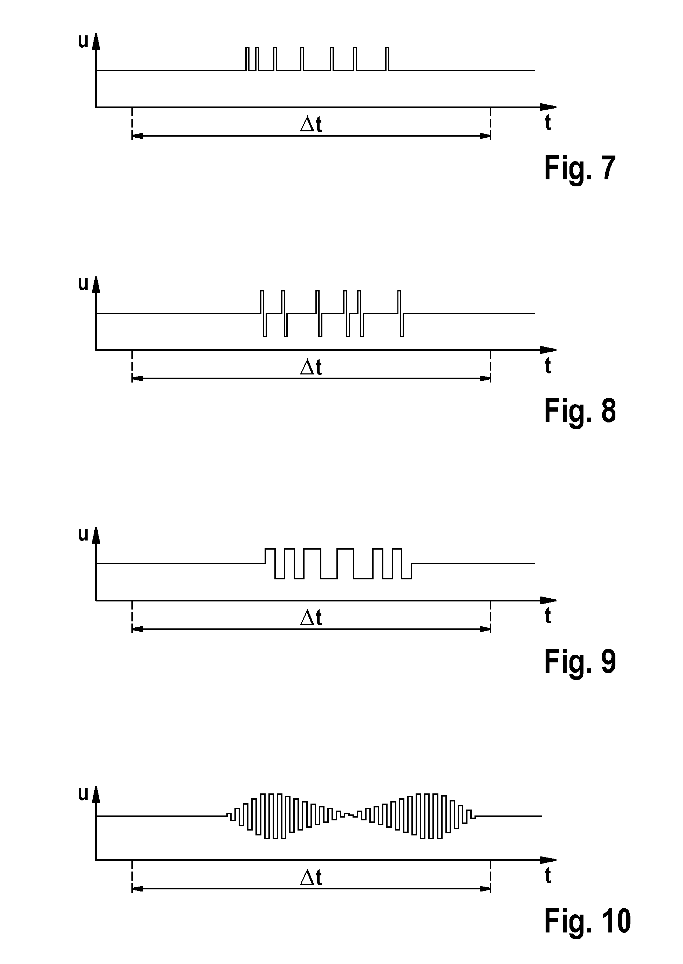

Die Übertragung der Zusatzinformationen erfolgt durch Modulierung eines analogen Spannungssignals 500, welches vom Akkupack 100 an einer Kommunikationsschnittstelle 133 bereitgestellt wird. Als analoges Spannungssignal 500 kann dabei ein Temperatursignal dienen, welches von einem Temperaturmesswiderstand des Akkupacks 100 bereitgestellt wird. Alternativ kann als analoges Spannungssignal 500 auch ein von einem Codierwiderstand des Akkupacks 100 bereitgestelltes Spannungssignal verwendet werden. Vorteilhafter Weise wird die Zusatzinformation zeitlich parallel zu der Basisinformation übertragen. Dabei ist es sinnvoll, wenn das Auslesen der Basisinformation durch die gleichzeitige Übertragung der Zusatzinformation möglichst wenig beeinflusst wird. Um dies zu erreichen kann ein Modulationsverfahren verwendet werden, welches den Mittelwert des analogen Spannungssignals 500 über einen zum Messen bzw. zum Auslesen des analogen Spannungssignals 500 typischen Zeitraum Δt nicht ändert. Dies kann beispielsweise mit Hilfe einer Pulsmodulation erreicht werden, bei welcher das Verhältnis von Pulsdauer zur Periodendauer (Tastgrad) sehr gering ausfällt. Die **Figur 7** zeigt beispielhaft ein mittels Pulsmodulation moduliertes Spannungssignal. Dabei ist dem analogen Spannungssignal eine Pulsfolge mit einem geringen Tastgrad überlagert. Durch die relativ kurze Pulsdauer, die relativ lange Pulsperiode sowie eine entsprechend geringe Amplitude der Pulse kommt es während der Auslesezeit Δt nur zu geringen Spannungsschwankungen, sodass der gemessene Signalpegel des modulierten Spannungssignals 520 im Wesentlichen dem tatsächlichen Signalspegel des analogen Spannungssignals 500 entspricht.

Um Auslesefehler des analogen Spannungssignals 500 zu vermeiden, welche aufgrund von Spannungsschwankungen durch die Modulation auftreten können, können auch symmetrische Pulssignale verwendet werden, die jeweils einen positiven und negativen Pulsauschlag aufweisen. Die **Figur 8** zeigt ein entsprechend moduliertes analoges Spannungssignal.

Während bei der in der Figur 8 beispielhaft gezeigten Pulsmodulation die Zusatzinformation in Form unterschiedlicher Periodendauern übertragen wird, zeigt die **Figur 9** eine weitere Möglichkeit für eine Pulsmodulation, bei welcher unterschiedliche Pulsweiten zur Übertragung der Zusatzinformation verwendet werden.

Neben den Pulsmodulationen können grundsätzlich auch andere Methoden zur Übertragung der Zusatzinformationen verwendet werden. Hierzu zeigt die **Figur 10** beispielhaft ein mittels einer Amplitudenmodulation moduliertes analoges Spannungssignal 500.

Obwohl das erfinderische Konzept in der vorstehenden Beschreibung lediglich im Zusammenhang mit einer mittels schaltbaren Widerständen realisierten Modulation des analogen Spannungssignals offenbart wurde, könne grundsätzlich auch andere Methoden zum Modulieren des analogen Spannungssignals verwendet werden. Beispielsweise ist es möglich, den Pegel des analogen Spannungssignals durch Zuschalten einer Spannungsquelle in gewünschter Weise zu variieren.

## Patentansprüche

1. Verfahren zum Übertragen von Informationen eines Akkupacks (100) an ein angeschlossenes elektrisches Gerät (200, 300),
wobei eine Basisinformation des Akkupacks (100) in Form eines bestimmten Spannungswertes eines analogen Spannungssignals (500) über eine Kommunikationsschnittstelle (133, 233) an das elektrische Gerät (200, 300) übertragen wird,
**dadurch gekennzeichnet,**
**dass** das analoge Spannungssignal (500) moduliert und mithilfe des modulierten Spannungssignals (520) eine Zusatzinformation des Akkupacks (100) zusätzlich zu der Basisinformation über die Kommunikationsschnittstelle (133, 233) an das elektrische Gerät (200, 300) übertragen wird.

2. Verfahren nach Anspruch 1,
**dadurch gekennzeichnet,**
**dass** die Zusatzinformation in Form von positiven und/oder negativen Pulsen auf dem analogen Spannungssignal (500) übertragen wird.

3. Verfahren nach Anspruch 1 oder 2,
**dadurch gekennzeichnet,**
**dass** der zu einem beliebigen Zeitpunkt über eine Zeitdauer (Δt), welche das elektrische Gerät (200, 300) zum Messen des analogen Spannungssignals (500) benötigt, gemittelte aktuelle Spannungswert des modulierten Spannungssignals (510) im Wesentlichen dem zu dem jeweiligen Zeitpunkt aktuellen Spannungswert des analogen Spannungssignals (500) entspricht.

4. Verfahren nach einem der vorhergehenden Ansprüche,
**dadurch gekennzeichnet,**
**dass** ein der Zusatzinformation entsprechender modulierter zweiter Signalanteil (510) des modulierten Spannungssignals (520) von dem elektrischen Gerät (200, 300) herausgefiltert wird, um einen die Basisinformation enthaltenen unmodulierten ersten Signalanteil (500) des modulierten Spannungssignals (520) zu erhalten.

5. Verfahren nach einem der vorhergehenden Ansprüche,
**dadurch gekennzeichnet,**
**dass** das die Basisinformation enthaltende analoge Spannungssignal (500) im elektrischen Gerät (200, 300) mithilfe eines Tiefpassfilters aus dem modulierten Spannungssignal (520) ermittelt wird.

6. Verfahren nach einem der vorhergehenden Ansprüche,
**dadurch gekennzeichnet,**
**dass** mithilfe der Zusatzinformation wenigstens eine Spezifikation des Akkupacks () übertragen wird.

7. Verfahren nach Anspruch 8,
**dadurch gekennzeichnet,**
**dass** mithilfe der Zusatzinformation ein Stromwert, eine Abschaltbedingung, eine Länderspezifische Kodierung und/oder eine Kompatibilitätsinformation übertragen wird.

8. Verfahren nach einem der vorhergehenden Ansprüche,
**dadurch gekennzeichnet,**
**dass** die Zusatzinformation automatisch nach dem Anschließen des Akkupacks (100) an das elektrische Gerät (200, 300) übertragen wird.

9. Akkupack (100) zum Durchführen eines Verfahrens nach einem der vorhergehenden Ansprüche,
wobei der Akkupack (100) eine Kommunikationsschnittstelle (133) zum Übertragen einer Basisinformation in Form von eines analogen Spannungssignals (500) an ein angeschlossenes elektrisches Gerät (200, 300) umfasst, **dadurch gekennzeichnet,**
**dass** der Akkupack (100) eine Steuereinrichtung (121) zum Modulieren des analogen Spannungssignals (500) umfasst, wobei die Steuereinrichtung (121) ausgebildet ist, mithilfe des modulierten Spannungssignals (510) wenigstens eine Zusatzinformation des Akkupacks (100) zusätzlich zu der Basisinformation über die Kommunikationsschnittstelle (133) zu übertragen.

10. Elektrisches Gerät (200, 300) zum Durchführen eines Verfahrens nach einem der vorhergehenden Ansprüche,
wobei das elektrische Gerät eine Kommunikationsschnittstelle (233, 333) zum Empfangen einer Basisinformation in Form von eines analogen Spannungssignals (500) von einem angeschlossenes Akkupack (100) umfasst, **dadurch gekennzeichnet,**
**dass** das elektrische Gerät (200, 300) ausgebildet ist, über die Kommunikationsschnittstelle (233, 333) ein moduliertes Spannungssignal (502) zu empfangen und aus dem empfangenen modulierten Spannungssignal (520) neben der Basisinformation zusätzlich auch eine Zusatzinformation des Akkupacks (100) zu gewinnen.
